# EUROPEAN PATENT APPLICATION

(11) **EP 2 400 804 A1**
(43) Date of publication of application: **28.12.2011**
(21) Application number: 09840359.5
(22) Date of filing: 23.02.2009
(51) Int. Cl.: H04W 52/26

(54) **RADIO COMMUNICATION DEVICE AND TRANSMISSION POWER CONTROL METHOD**

(71) Applicant: Fujitsu Limited, Kawasaki-shi, Kanagawa 211-8588 (JP)
(72) Inventor: FUJII, Takahiro, Kawasaki-shi Kanagawa 211-8588 (JP)
(74) Representative: Lewin, David Nicholas
(86) International application number: PCT/JP2009/053143
(87) International publication number: WO 2010/095253

(57) **Abstract**

In transmission power control of radio communication, interference can be efficiently suppressed.

A radio communication apparatus (1) is capable of controlling, according to reception quality of a signal from other radio communication apparatuses (2), transmission power to the other radio communication apparatuses (2). This radio communication apparatus (1) includes a controller (1a) and a transmitter (1b). The controller (1a) sets target reception quality (e.g., a target SIR) of a signal from the other radio communication apparatuses (2) according to an allocation state of radio resources used for data transmission by the other radio communication apparatuses (2). The transmitter (1b) transmits a control signal for controlling the transmission power to the other radio communication apparatuses (2) based on the reception quality and the target reception quality set by the controller (1a).

## Description

### Technical Field

The embodiment discussed herein is related to a radio communication apparatus and a transmission power control method.

### Background Art

Radio communication systems have been widely used today, including cellular phone systems and wireless local area networks (wireless LANs). For maintaining communication quality and suppressing interference, some radio communication systems adaptively change transmission power of a radio communication apparatus of the transmission side. In a mobile communication system with a code division multiple access (CDMA) method, for example, a radio base station can monitor reception quality such as a signal to interference ratio (SIR), and change transmission power (uplink transmission power) of mobile stations.

As a transmission power control method of radio communication, a double closed-loop control including outer loop control and inner loop control is used. In the outer loop control, target reception quality (e.g., target SIR) of signals is set by using reception quality acquired by the measurement of a relatively long interval, such as a block error rate (BLER). In the inner loop control, reception quality acquired by the measurement of a relatively short interval, such as the SIR and the target reception quality set by the outer loop control are compared, and transmission power of the radio communication apparatus of the transmission side is determined to be appropriate.

There is disclosed one method in which regarding the double closed-loop control, when a frame error is monitored and a target SIR is set on the reception side, an update interval of the target SIR can be flexibly changed by using a parameter (see, for example, Patent Document 1). Further, there is disclosed another method in which in transmission power (downlink transmission power) control of a radio base station, a mobile station compares a BLER and a target BLER to set a target SIR, and compares an SIR and the target SIR to transmit a transmission power control command (see, for example, Patent Document 2). In addition, there is disclosed another method in which when a target SIR is changed in a phased manner in the outer loop control, a step width is adjusted and convergence of the target SIR is quickened (see, for example, Patent Document 3).
Patent Document 1: Japanese Laid-open Patent Publication No. 2000-252917
Patent Document 2: Japanese Laid-open Patent Publication No. 2008-48175
Patent Document 3: Published Japanese translation of a PCT application No. 2005-539438

### Disclosure of Invention

### Problems to be Solved by the Invention

However, in the transmission power control method as disclosed in Patent Documents 1 to 3, target reception quality (e.g., target SIR) is set in the outer loop control without relation to a current data transmission and reception state. Accordingly, for example, there is the possibility that high target reception quality is set with respect to a radio communication apparatus that fails to perform data transmission and transmission power of the radio communication, apparatus becomes large. In this case, there is a problem that there occurs interference between the radio communication apparatus and other radio communication apparatuses during the data transmission.

In view of the foregoing, it is an object of the present invention to provide a radio communication apparatus capable of efficiently suppressing interference in radio communication and a transmission power control method.

### Means for Solving the Problems

To accomplish the above objects, according to one aspect of the present invention, there is provided a radio communication apparatus capable of controlling, according to reception quality of a signal from other radio communication apparatuses, transmission power to the other radio communication apparatuses. This radio communication apparatus includes a controller to set target reception quality of a signal from the other radio communication apparatuses according to an allocation state of radio resources used for data transmission by the other radio communication apparatuses, and a transmitter to transmit a control signal for controlling the transmission power to the other radio communication apparatuses based on the reception quality and the target reception quality set by the controller.

Further, to accomplish the above objects, according to another aspect of the present invention, there is provided a transmission power control method for use in a radio communication apparatus capable of controlling, according to reception quality of a signal from other radio communication apparatuses, transmission power of the other radio communication apparatuses. In this transmission power control method, target reception quality of a signal from the other radio communication apparatuses is set according to an allocation state of radio resources used for data transmission by the other radio communication apparatuses. A control signal for controlling the transmission power is transmitted to the other radio communication apparatuses based on the reception quality and the set target reception quality.

### Advantage of the Invention

The proposed radio communication apparatus and transmission power control method permit interference in the radio communication to be efficiently suppressed.

The above-mentioned and other objects, features and advantages of this invention will become apparent from the following detailed description of the presently preferred embodiment of the invention, taken in conjunction with the accompanying drawings.

### Brief Description of Drawings

FIG. 1 illustrates an example of a radio communication apparatus;
FIG. 2 illustrates a system configuration of a mobile communication system;
FIG. 3 is a block diagram illustrating a mobile station;
FIG. 4 is a block diagram illustrating a radio base station;
FIG. 5 is a block diagram illustrating a radio network controller;
FIG. 6 illustrates a data structure of a user priority table;
FIG. 7 illustrates a data structure of an SIR table;
FIG. 8 illustrates a data structure of a target SIR management table;
FIG. 9 is a flowchart illustrating transmission power control;
FIG. 10 illustrates a change example of a target SIR; and
FIG. 11 is a sequence diagram illustrating handover control.

### Best Mode for Carrying Out the Invention

Preferred embodiments of the present invention will now be described in detail below with reference to the accompanying drawings, wherein like reference numerals refer to like elements throughout.

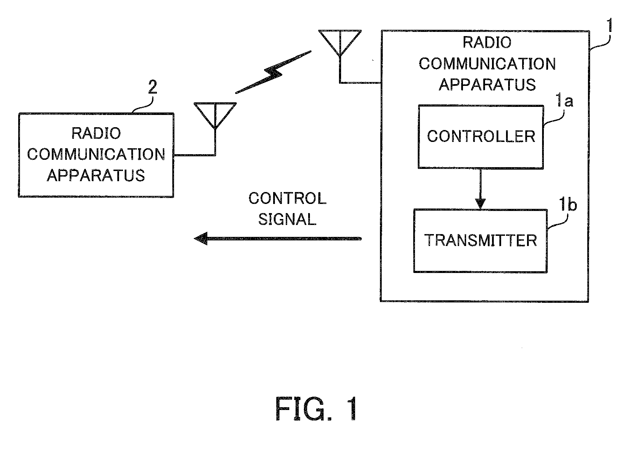

FIG. 1 illustrates an example of a radio communication apparatus. The radio communication apparatus 1 communicates wirelessly with the radio communication apparatus 2. For example, the radio communication apparatus 1 may be a radio base station, and the radio communication apparatus 2 may be a mobile station. The radio communication apparatus 1 controls transmission power of the radio communication apparatus 2. The radio communication apparatus 1 includes a controller 1a and a transmitter 1b.

The controller 1a sets target reception quality (e.g., a target SIR) according to an allocation state of radio resources for data transmission to the radio communication apparatus 2. For example, as a radio resource amount allocated to the radio communication apparatus 2 is larger, the controller 1a higher sets the target reception quality. The controller 1a may guide the target reception quality in a phased manner so as to become a desired level in the timing at which an allocation of radio resources is present. The target reception quality is considered to be regularly updated, for example, at a transmission time interval (TTI) of a radio frame. In addition, the radio resources may be allocated by the radio communication apparatus 1, or other radio communication apparatuses.

The transmitter 1b transmits a control signal for controlling the transmission power to the radio communication apparatus 2 based on the target reception quality set by the controller 1a. Examples of the control signal include a transmission power control (TPC) signal. Whether current transmission power from the radio communication apparatus 2 is appropriate is determined, for example, by comparing the set target reception quality and the current reception quality (e.g., SIR measured by the radio communication apparatus 1). The radio communication apparatus 2 controls the transmission power according to contents (e.g., an instruction of UP or DOWN) indicated by the control signal.

As can be seen from the above description, the controller 1a in the proposed radio communication apparatus 1 sets the target reception quality of signals from the radio communication apparatus 2 according to the allocation state of radio resources used for data transmission by the radio communication apparatus 2. Then, the transmitter 1b transmits the control signal for controlling the transmission power to the radio communication apparatus 2 based on the reception quality of signals from the radio communication apparatus 2 and the target reception quality set by the controller 1a.

This process permits the transmission power of the radio communication apparatus 2 to be flexibly changed according to the data transmission state of the radio communication apparatus 2, and interference in the radio communication to be efficiently suppressed. For example, when the radio communication apparatus 2 fails to transmit data, the target reception quality is considered to be low suppressed. Further, when the target reception quality is guided in a phased manner so as to be desired target reception quality in the timing at which the allocation of radio resources is present, interference can be more suppressed.

Hereinafter, description will be made in more detail on an example of a mobile communication system in which the radio base station controls transmission power (uplink transmission power) of the mobile station by using the above-described transmission power control method. Note that the above-described transmission power control method can also be applied to the control of transmission power except the uplink transmission power, and the transmission power control of other types of the radio communication systems.

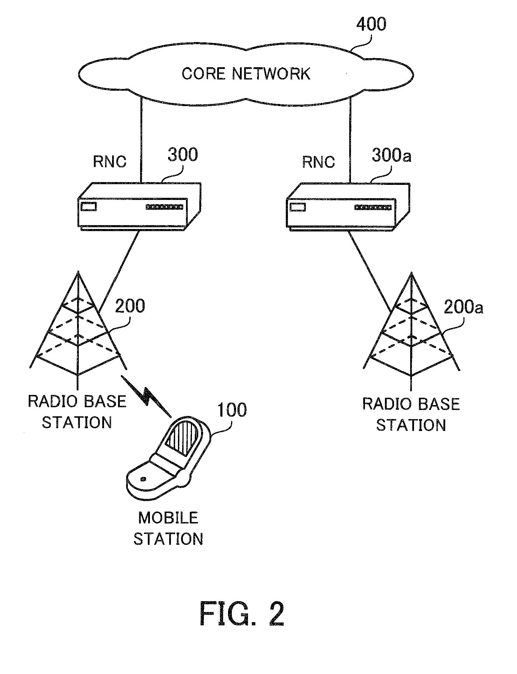

FIG. 2 illustrates a system configuration of the mobile communication system. The mobile communication system according to the present embodiment includes a mobile station 100, radio base stations 200 and 200a, radio network controllers (RNCs) 300 and 300a, and a core network 400. Here, the radio base station 200 and the RNC 300 are connected through a wire, and the radio base station 200a and the RNC 300a are connected through a wire. Further, the RNCs 300 and 300a are connected to the core network 400 through wires, respectively.

The mobile station 100 is a radio terminal apparatus capable of communicating wirelessly with the radio base stations 200 and 200a. Examples of the mobile station 100 include a cellular phone. The mobile station 100 can transmit data to the radio base stations 200 and 200a via an uplink. In addition, when receiving a transmission power control command (TPC command) from the radio base stations 200 and 200a, the mobile station 100 controls (UP or DOWN) the uplink transmission power according to its contents.

The radio base stations 200 and 200a are radio communication apparatuses that communicate wirelessly with the mobile station 100. When receiving data from the mobile station 100 via an uplink, the radio base station 200 transmits it to the RNC 300. In a similar fashion, the radio base station 200a transmits the received data from the mobile station 100 to the RNC 300a. Here, the radio base stations 200 and 200a allocate uplink radio resources to the mobile station 100. Further, the radio base stations 200 and 200a monitor an SNR of received signals from the mobile station 100, and appropriately transmit a TPC command to the mobile station 100 according to the SNR.

The RNCs 300 and 300a are relaying apparatuses that control the radio base stations serving under them, and at the same time, transfer data between the radio base stations and the core network 400, respectively. The RNC 300 controls the radio base station 200, and the RNC 300a controls the radio base station 200a. For example, the RNCs 300 and 300a control handover (changeover of the radio base station of an access destination) of the mobile station 100. In addition, under the RNCs 300 and 300a, a plurality of radio base stations can be provided, respectively.

The core network 400 is a wired network that controls traffic, and relays data transmitted and received by the mobile station 100. Within the core network 400, for example, a circuit switch that processes a circuit switching (CS) call and a packet switch that processes a packet switching (PS) call are provided. Further, the core network 400 relays a control message transmitted and received between the RNCs 300 and 300a.

The above-described mobile communication system can be realized, for example, as a CDMA communication system having a high speed uplink packet access (HSUPA) function. Hereinafter, description will be made on a case of adopting a CDMA method as a communication method. Note that the transmission power control method according to the present embodiment is also considered to be applied to a communication system having adopted therein other communication methods, such as a frequency division multiple access (FDMA) and an orthogonal frequency division multiple access (OFDMA).

One communication line between the radio base station 200 and the RNC 300 as well as another communication line between the radio base station 200a and the RNC 300a may be referred to as an Iub line. A communication line between the RNCs 300 and 300a may be referred to as an Iur line. Communication lines between the core network 400 and each of the RNCs 300 and 300a may be referred to as Iu lines. In the above-described system configuration example, the Iur line is established through the core network 400, and further the RNCs 300 and 300a may be directly connected without going through the core network 400.

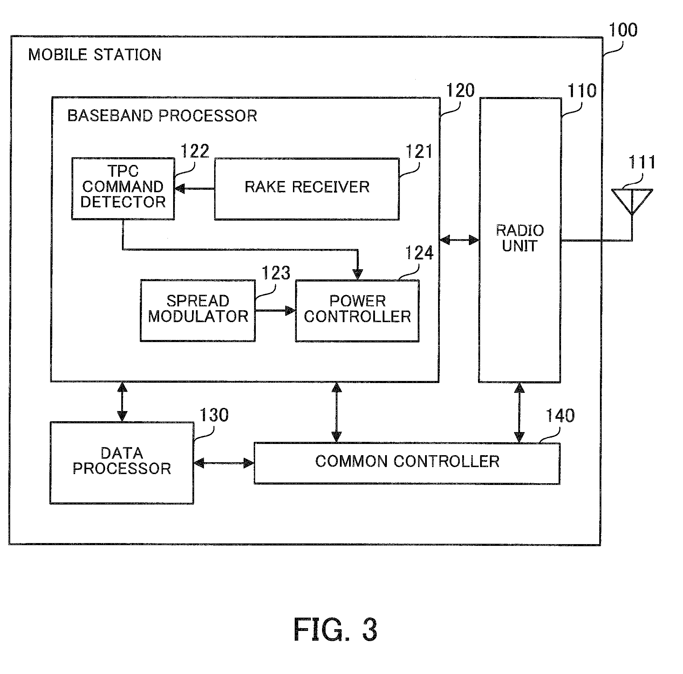

FIG. 3 is a block diagram illustrating the mobile station. The mobile station 100 includes a radio unit 110, a baseband processor 120, a data processor 130, and a common controller 140. Here, the following discussion will focus on modules related to the uplink transmission power control, arbitrarily omitting explanations of the other modules.

The radio unit 110 performs radio signal processing between an antenna 111 and the baseband processor 120. Specifically, the radio unit 110 converts a radio signal received by the antenna 111 into a baseband signal, and supplies it to the baseband processor 120. On the other hand, the radio unit 110 converts a baseband signal acquired from the baseband processor 120 into a radio signal, and outputs it by using the antenna 111. Note that the mobile station 100 may include a plurality of antennas (e.g., transmitting and receiving antennas).

The baseband processor 120 performs baseband signal processing between the radio unit 110 and the data processor 130. Specifically, the baseband processor 120 subjects the baseband signal acquired from the radio unit 110 to error-correction decoding and inverse spread demodulation, extracts user data, and supplies it to the data processor 130. On the other hand, the baseband processor 120 subjects user data acquired from the data processor 130 to error-correction coding and spread modulation, and supplies the baseband signal to the radio unit 110. In addition, the baseband processor 120 controls a radio link.

The data processor 130 subjects the user data acquired from the baseband processor 120 to processing according to the type of its data content. For example, the data processor 130 causes voice data to be reproduced and voices to be output by using a speaker of the mobile station 100, or image data to be reproduced and the images to be displayed on a display of the mobile station 100. Further, the data processor 130 generates user data, and supplies it to the baseband processor 120.

The common controller 140 controls the entire behavior of the mobile station 100. Specifically, the common controller 140 controls a start and end of various kinds of processing in the radio unit 110, the baseband processor 120, and the data processor 130. For example, when the power supply of the mobile station 100 is turned on, the common controller 140 starts to supply power to the radio unit 110, the baseband processor 120, and the data processor 130, and at the same time, causes the baseband processor 120 to establish the radio link.

Here, the baseband processor 120 has a RAKE receiver 121, a TPC command detector 122, a spread modulator 123, and a power controller 124. Here, the following discussion will focus on the transmission power control.

The RAKE receiver 121 subjects the baseband signal acquired from the radio unit 110 to RAKE reception processing. Specifically, the RAKE receiver 121 performs inverse spread by using a predetermined spread code or a spread code allocated to the mobile station 100, extracts a symbol of each path, and combines the symbols at the same phase. Then, the RAKE receiver 121 supplies a received signal after the RAKE combination to the TPC command detector 122.

The TPC command detector 122 extracts a transmission power control command (TPC command) from the received signal acquired from the RAKE receiver 121. The TPC command is included in a downlink dedicated physical control channel (DPCCH). The TPC command is expressed, for example, in 1-bit for discriminating UP or DOWN of the transmission power. Then, the TPC command detector 122 supplies the extracted TPC command to the power controller 124.

By using a spread code allocated to the mobile station 100, the spread modulator 123 spreads the user data that is received from the data processor 130 and error-correction coded by the baseband processor 120. Then, the spread modulator 123 supplies the spread signal to the power controller 124.

The power controller 124 controls transmission power of the spread signal acquired from the spread modulator 123. Concretely, the power controller 124 manages the current transmission power level, and raises and lowers the transmission power level based on the TPC command acquired from the TPC command detector 122. For example, when acquiring an UP command, the power controller 124 raises the transmission power level as much as a predetermined width, whereas when acquiring a DOWN command, the power controller 124 lowers the transmission power level as much as a predetermined width. Then, the power controller 124 corrects the spread signal according to the transmission power level, and supplies the acquired baseband signal to the radio unit 110.

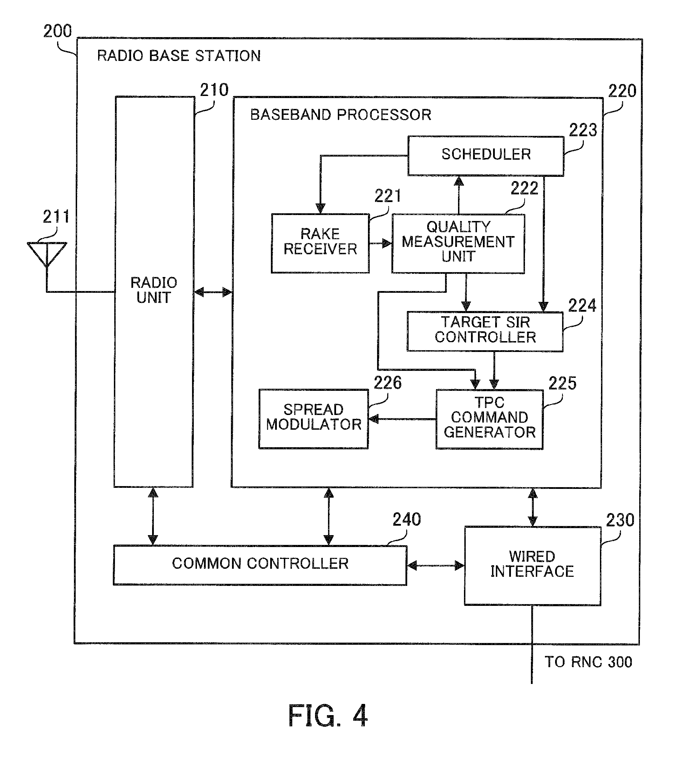

FIG. 4 is a block diagram illustrating the radio base station. The radio base station 200 includes a radio unit 210, a baseband processor 220, a wired interface 230, and a common controller 240. Also, the radio base station 200a can be realized by using the same module configuration as that of the radio base station 200. Here, the following discussion will focus on modules related to the uplink transmission power control, arbitrarily omitting explanations of the other modules.

The radio unit 210 performs radio signal processing between an antenna 211 and the baseband processor 220. Specifically, the radio unit 210 converts a radio signal received by the antenna 211 into a baseband signal, and supplies it to the baseband processor 220. On the other hand, the radio unit 210 converts a baseband signal acquired from the baseband processor 220 into a radio signal, and outputs it by using the antenna 211. Note that the radio base station 200 may include a plurality of antennas.

The baseband processor 220 performs baseband signal processing between the radio unit 210 and the wired interface 230. Specifically, the baseband processor 220 subjects the baseband signal acquired from the radio unit 210 to inverse spread demodulation and error-correction decoding, extracts user data, and supplies it to the wired interface 230. On the other hand, the baseband processor 220 subjects the user data acquired from the wired interface 230 to error-correction coding and spread modulation, and supplies the baseband signal to the radio unit 210. In addition, the baseband processor 220 controls the radio link.

The wired interface 230 performs wired communication with the RNC 300, and transmits and receives user data. Specifically, the wired interface 230 transmits to the RNC 300 the user data acquired from the baseband processor 220, and at the same time, supplies to the baseband processor 220 the user data received from the RNC 300. Further, when receiving a control parameter from the RNC 300, the wired interface 230 supplies it to the baseband processor 220.

The common controller 240 controls the entire behavior of the radio base station 200. Specifically, the common controller 240 controls a start and end of various kinds of processing in the radio unit 210, the baseband processor 220, and the wired interface 230.

Here, the baseband processor 220 has a RAKE receiver 221, a quality measurement unit 222, a scheduler 223, a target SIR controller 224, a TPC command generator 225, and a spread modulator 226. Here, the following discussion will focus on the transmission power control.

The RAKE receiver 221 subjects the baseband signal acquired from the radio unit 210 to RAKE reception processing. Specifically, the RAKE receiver 221 performs inverse spread by using a predetermined spread code or a spread code allocated to the mobile station 100, extracts a symbol of each path, and combines the symbols at the same phase. Then, the RAKE receiver 221 supplies a received signal after the RAKE combination to the quality measurement unit 222. The RAKE receiver 221 selects a channel to be processed based on the scheduling results acquired from the scheduler 223.

The quality measurement unit 222 measures uplink communication quality by using a received signal acquired from the RAKE receiver 221. Concretely, the quality measurement unit 222 measures an SIR and a bit error rate (BER) from the received signal. Further, the quality measurement unit 222 measures a reception power level and the amount of interference. Then, the quality measurement unit 222 notifies the target SIR controller 224 and the TPC command generator 225 of the SIR, notifies the target SIR controller 224 of the BER, and notifies the scheduler 223 of the reception power level and the amount of interference. Note that the quality measurement unit 222 may perform a quality measurement by using a signal before the RAKE combination.

The scheduler 223 refers to the amount of interference and reception power level acquired from the quality measurement unit 222, and manages the radio resource allocation of the uplink data channel. Examples of the uplink data channel include an E-dedicated physical data channel (E-DPDCH). The scheduler 223 notifies the RAKE receiver 221 and the target SIR controller 224 of the scheduling results.

The target SIR controller 224 sets a target value (target SIR) of the SIR of a received signal from the mobile station 100. The target SIR controller 224 calculates the target SIR based on the SIR and BER acquired from the quality measurement unit 222 and the scheduling results acquired from the scheduler 223. Then, the target SIR controller 224 notifies the TPC command generator 225 of the set target SIR.

The target SIR controller 224 can update the target SIR in units of a subframe of a TTI (e.g., 2 msec) period. Note that the target SIR controller 224 can update the target SIR in an interval shorter or longer than that of a subframe, or on an irregular base according to a state of the radio link. When acquiring control parameters indicating the target SIR from the RNC 300, the target SIR controller 224 may collectively consider the target SIR indicated by them. Further, the target SIR controller 224 can use indexes except the SIR and the BER, as an index indicating communication quality of a relatively short interval.

The TPC command generator 225 compares the SIR acquired from the quality measurement unit 222 and the target SIR acquired from the target SIR controller 224, and generates a TPC command. For example, when the current SIR is smaller than the target SIR, the TPC command generator 225 generates an UP command, whereas when the current SIR is larger than or equal to the target SIR, the TPC command generator 225 generates a DOWN command. The TPC command is expressed, for example, by 1-bit. Then, the TPC command generator 225 supplies the generated TPC command to the spread modulator 226.

The spread modulator 226 spreads the TPC command acquired from the TPC command generator 225 by using a predetermined spread code, and generates a DPCCH spread signal. Then, the spread modulator 226 supplies the acquired baseband signal to the radio unit 210.

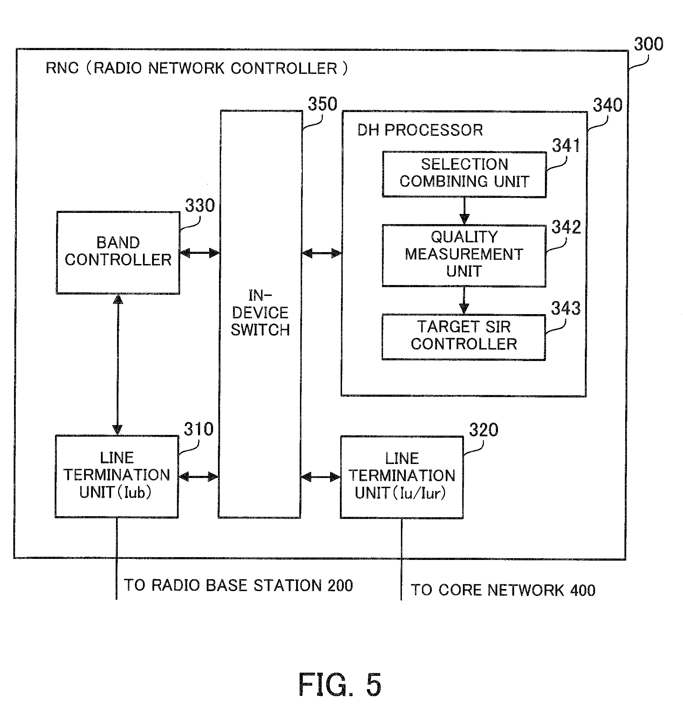

FIG. 5 is a block diagram illustrating the radio network controller. The RNC 300 includes line termination units 310 and 320, a band controller 330, a diversity handover (DH) processor 340, and an in-device switch 350. Also, the RNC 300a can be realized by using the same module configuration as that of the RNC 300. Here, the following discussion will focus on modules related to the uplink transmission power control, arbitrarily omitting explanations of the other modules.

The line termination unit 310 is a communication interface that communicates with the radio base station 200 by using the Iub line. The line termination unit 310 transfers to the DH processor 340 the uplink user data received from the radio base station 200, and at the same time, transmits to the radio base station 200 the downlink user data acquired from the DH processor 340. In addition, the line termination unit 310 transmits to the radio base station 200 the control parameters indicating the target SIR acquired from the DH processor 340.

The line termination unit 320 is a communication interface that performs communication (communication by using the Iu line or the Iur line) through the core network 400. The line termination unit 320 transmits to the core network 400 the selected and combined user data acquired from the DH processor 340, and at the same time, transfers to the DH processor 340 the downlink user data received from the core network 400. In addition, by using the Iur line, the line termination unit 320 transmits and receives various control parameters between the unit 320 and the RNC 300a.

The band controller 330 controls a communication band between the mobile station 100 and the RNC 300. For example, the band controller 330 monitors traffic, and dynamically secures a band according to it. Further, the band controller 330 can also control a delay time and a packet abort amount so as to be prevented from exceeding a threshold according to quality of service (QoS) class.

The DH processor 340 supplies to the line termination unit 320 the uplink user data acquired from the line termination unit 310, and at the same time, supplies to the line termination unit 310 the downlink user data acquired from the line termination unit 320. Here, when the mobile station 100 performs communication with a plurality of radio base stations (during soft handover), the DH processor 340 performs diversity processing with respect to a plurality of user data blocks with the same content in which transmission paths are different from each other. Specifically, the DH processor 340 selects and combines the uplink user data, and at the same time, reproduces the downlink user data as much as the number of the radio base stations.

The in-device switch 350 is a switch that transfers various data blocks within the RNC 300. Specifically, the in-device switch 350 is connected to the line termination units 310 and 320, the band controller 330, and the DH processor 340, and transfers each data between these modules. For a data transfer, for example, an asynchronous transfer mode (ATM) system can be adopted.

Here, the DH processor 340 has a selection combining unit 341, a quality measurement unit 342, and a target SIR controller 343. Here, the following discussion will focus on the uplink communication control.

The selection combining unit 341 selects and combines the user data acquired from the line termination unit 310. For example, the selection combining 341 refers to an added sequence number and information indicating radio quality, and selects user data having a most excellent reception state from among a plurality of user data blocks with the same content. Then, the selection combining unit 341 supplies the selected and combined user data to the quality measurement unit 342.

The quality measurement unit 342 monitors the selectively combined user data acquired from the selection combining unit 341, and measures the BLER. Then, the quality measurement unit 342 notifies the target SIR controller 343 of the BLER. Note that as an index indicating data quality over a relatively long interval, the quality measurement unit 342 may measure indexes except the BLER.

The target SIR controller 343 determines the target SIR based on the BLER acquired from the quality measurement unit 342. For example, the target SIR controller 343 compares the current BLER and the target value (target BLER) of the predetermined BLER, and adjusts the target SIR. The target SIR controller 343 may regularly update the target SIR, or irregularly update it according to a change in the BLER. Then, the target SIR controller 343 transmits a control parameter indicating the target SIR to the radio base station 200 through the line termination unit 310.

An update interval of the target SIR in the RNC 300 is considered to be longer than that in the radio base station 200. The radio base station 200 can simultaneously use both of the target SIR calculated by the radio base station 200 and that calculated by the RNC 300. Note, however, that the radio base station 200 can also ignore the target SIR calculated by the RNC 300. Further, the RNC 300 may be prevented from calculating the target SIR.

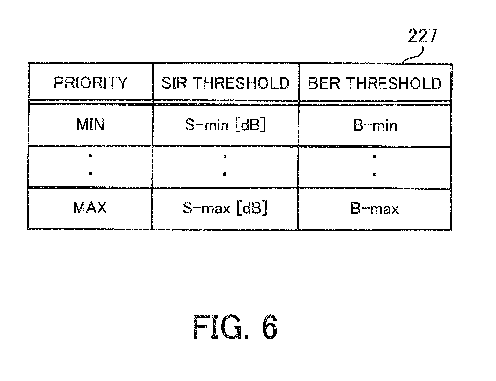

FIG. 6 illustrates a data structure of a user priority table. The user priority table 227 is previously stored in a storage unit (e.g., nonvolatile memory) of the radio base station 200, and the target SIR controller 224 can refer to it. In the user priority table 227, items representing the priority, the SIR threshold, and the BER threshold are provided. Information units arranged in the lateral direction of each item are related to each other.

In the item of the priority, a value (e.g., integer) indicating the priority capable of being set in the mobile station 100 is set. In the item of the SIR threshold, a reference value (e.g., decibel value) of the SIR used for determination of whether to raise the target SIR is set. The SIR threshold means a permissible lower limit of the SIR. In the item of the BER threshold, a reference value of the BER used for determination of whether to raise the target SIR is set. The BER threshold means a permissible upper limit of the BER.

When the current SIR is smaller than the SIR threshold and the current BER is larger than the BER threshold, it is preferable that the target SIR is raised. Note that in the SIR threshold and the BER threshold, a difference can be provided according to the priority. For example, it is considered that the SIR threshold with low priority is set to be smaller than the SIR threshold with high priority, and the BER threshold with low priority is set to be smaller than the BER threshold with high priority.

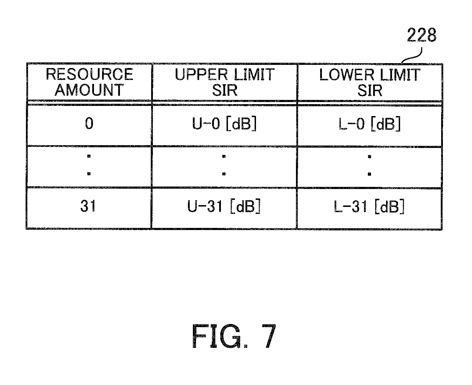

FIG. 7 illustrates a data structure of an SIR table.

The SIR table 228 is previously stored in the storage unit (e.g., nonvolatile memory) of the radio base station 200, and the target SIR controller 224 can refer to it. In the SIR table 228, items representing the amount of radio resources, the upper limit SIR, and the lower limit SIR are provided. Information units arranged in the lateral direction of each item are related to each other.

In the item of the amount of radio resources, a value indicating the amount of radio resources allocated to the mobile station 100 by the scheduler 223 is set. Examples of the value indicating the amount of radio resources include a value (0 to 31 in decimal number) of 5-bit referred to as a scheduling grant. In the item of the upper limit SIR, a preferable value of the upper side in the SIR range is set. In the item of the lower limit SIR, a preferable value of the lower side in the SIR range is set. In addition, it is considered that as the amount of radio resources is larger, the upper limit SIR and the lower limit SIR are set so as to be larger values.

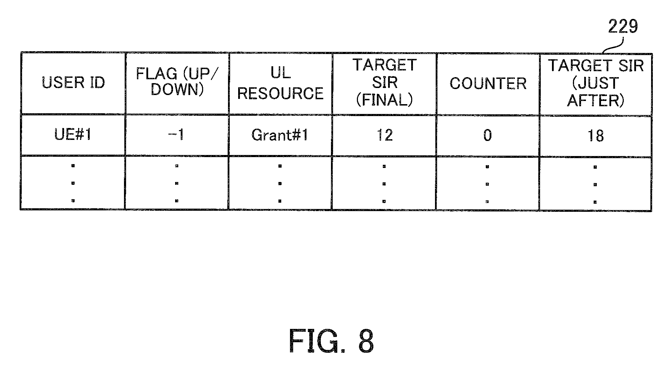

FIG. 8 illustrates a data structure of a target SIR management table. The target SIR management table 229 is previously stored in the storage unit (e.g., nonvolatile memory) of the radio base station 200, and the target SIR controller 224 can update and refer to it. In the target SIR management table 229, items representing the user ID, the flag, the UL resource, the target SIR (final), the counter, and the target SIR (just after) are provided. Information units arranged in the lateral direction of each item are related to each other.

In the item of the user ID, identification data of each mobile station is set. In the item of the flag, a value indicating whether to raise the target SIR in the next subframe is set. For example, in a case of raising the target SIR, a value +1 is set, and in cases except the above-described case, a value -1 is set. In the item of the UL resource, information indicating the radio resources allocated to each mobile station is set. In the information indicating the radio resources, the amount of allocated radio resources is included.

In the item of the target SIR (final), the target SIR in a subframe to which the radio resource allocation is applied, namely, a value indicating a final guide target of the SIR is set. In the item of the counter, a value (e.g., the number of passed subframes) indicating an elapsed time after the radio resource allocation is performed is set. Note, however, that after time reaches the subframe to which the radio resource allocation is applied, the counter is prevented from counting up. In the item of the target SIR (just after), the target SIR applied to the next subframe is set.

That is, in the target SIR management table 229, information for each mobile station is stored, and updated in each mobile station by the target SIR controller 224. The TPC command generator 225 generates a TPC command based on a value of the target SIR (just after). The TPC command generator 225 may generate a TPC command for each subframe, or intermittently generate it.

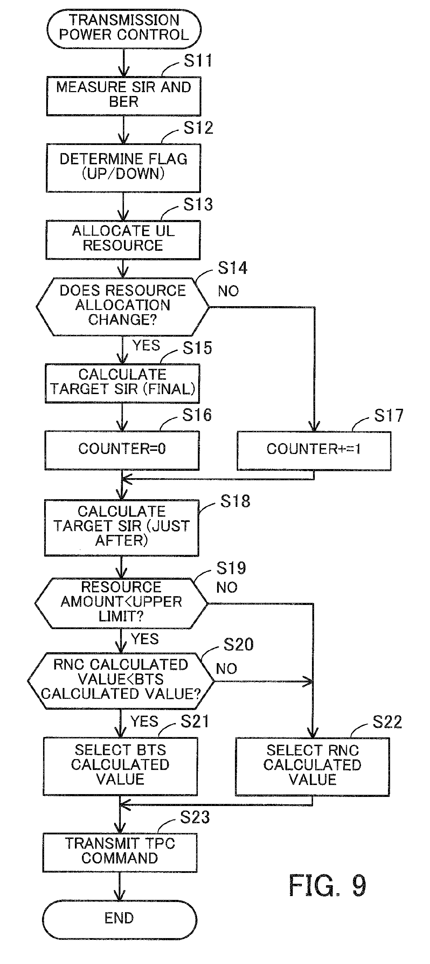

FIG. 9 is a flowchart illustrating the transmission power control. This process is continuously (e.g., in a TTI period) performed in each mobile station. Hereinafter, the process illustrated in FIG. 9 will be described along step numbers. Hereinafter, description will be made on a case where the radio base station 200 controls transmission power of the mobile station 100. Much the same is true on a case where the radio base station 200a controls transmission power of the mobile station 100.

(Step S11) The quality measurement unit 222 measures the SIR and the BER about the received signal acquired from the RAKE receiver 221.

(Step S12) The target SIR controller 224 determines a flag indicating up and down of the target SIR based on the SIR and BER measured at step S11. Concretely, the target SIR controller 224 acquires the SIR threshold and BER threshold corresponding to the priority of the mobile station 100 from the user priority table 227. In a case where the measured SIR is smaller than the SIR threshold, and the BER threshold is smaller than the measured BER, the target SIR controller 224 determines to be flag = 1 (UP), and in cases except the above-described case, the controller 224 determines to be flag = -1 (DOWN). Then, the target SIR controller 224 writes the determined flag in the target SIR management table 229.

(Step S13) The scheduler 223 allocates radio resources to the uplink data channel. The target SIR controller 224 writes information indicating allocation results of the radio resources in the target SIR management table 229.

(Step S14) The target SIR controller 224 determines whether the radio resource allocation of the mobile station 100 changes at step S13. If so, the process advances to step S15. If not, the process proceeds to step S17.

(Step S15) The target SIR controller 224 calculates the target SIR at a time when the radio resource allocation is reflected. Concretely, the target SIR controller 224 acquires from the SIR table 228 the upper limit SIR and lower limit SIR corresponding to the amount of radio resources allocated to the mobile station 100 at step S13. Then, the target SIR controller 224 sets (upper limit SIR + lower limit SIR)/2 to the target SIR (final). Subsequently, the target SIR controller 224 writes the target SIR (final) in the target SIR management table 229.

(Step S16) The target SIR controller 224 resets a counter of the mobile station 100 in the target SIR management table 229 to a value 0. The process then proceeds to step S18.

(Step S17) The target SIR controller 224 increments (adds only one) a counter of the mobile station 100 in the target SIR management table 229.

(Step S18) The target SIR controller 224 calculates the target SIR applied to the next subframe. Concretely, the target SIR controller 224 acquires a counter value of the mobile station 100, and the final and current target SIRs from the target SIR management table 229. Next, the target SIR controller 224 sets an absolute value of (current target SIR - final target SIR)/(waiting time for reflection of radio resource allocation - counter value) to variations. Further, the target SIR controller 224 sets (current target SIR + variation × flag) to the target SIR (just after). Then, the target SIR controller 224 writes the target SIR (just after) in the target SIR management table 229.

(Step S19) The target SIR controller 224 determines whether the amount of radio resources allocated to the mobile station 100 is smaller than the upper limit allocatable to one mobile station. If so, the process advances to step S20. If the amount of allocated radio resources is equal to the upper limit, the process proceeds to step S22.

(Step S20) The target SIR controller 224 compares one target SIR (calculated value of the radio base station 200) calculated at step S18 and another target SIR (calculated value of the RNC 300) notified from the RNC 300, and determines whether the calculated value of the RNC 300 is smaller than that of the radio base station 200. If so, the process advances to step S21. If not, the process proceeds to step S22.

(Step S21) The target SIR controller 224 determines the target SIR calculated at step S18 to be applied to the next subframe. The process then proceeds to step S23.

(Step S22) The target SIR controller 224 determines the target SIR notified from the RNC 300 to be applied to the next subframe. Here, when the amount of allocated radio resources is equal to the upper limit, priority of the calculated value of the RNC 300 is based on the premise that the RNC 300 assumes a maximum transmission rate and calculates the target SIR.

(Step S23) The TPC command generator 225 generates a TPC command by using the target SIR determined at step S21 or S22. The TPC command generator 225 transmits the generated TPC command to the mobile station 100.

The above steps permit the radio base station 200 to operate an allocation state of the radio resources of the uplink data channel along with the target SIR. Particularly, as the amount of allocated radio resources is larger, the radio base station 200 can enlarge the target SIR. In addition, while the radio resource allocation is reflected, the radio base station 200 can change the target SIR in a phased manner. As a result, the radio base station 200 can control transmission power of the mobile station 100 along with the allocation state of the radio resources.

The "waiting time for reflection of the radio resource allocation" used at the above step S18 means the number of the subframes necessary until the radio resource allocation is performed and reflected, and is, for example, four subframes. The waiting time for reflection may be common to all the mobile stations, or different for each mobile station. Further, the waiting time for reflection may be individually specified during the radio resource allocation.

At the above steps S19 to S22, when predetermined conditions are satisfied, the target SIR controller 224 adopts the target SIR calculated by the RNC 300, and further can always adopt the target SIR calculated by the radio base station 200. Alternatively, the target SIR controller 224 may adopt the target SIR calculated by the RNC 300 intermittently (e.g., only once in a plurality of subframes).

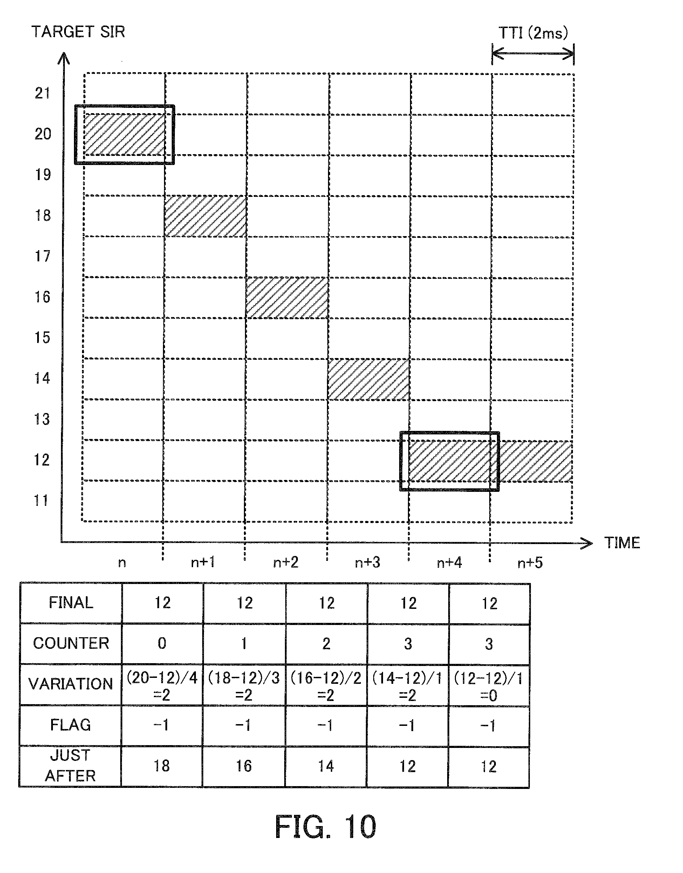

FIG. 10 illustrates a change example of the target SIR. FIG. 10 illustrates an example of a case where the radio resource allocation to the mobile station 100 is performed in a subframe n, and the allocation is reflected after four subframes of it. Suppose that the target SIR is set to 20 dB in the subframe n, and the target SIR (final) corresponding to the amount of allocated radio resources is equal to 12 dB.

In this case, in the subframe n at which the radio resource allocation is performed, counter = 0 and variation = (20-12)/4 = 2 dB are calculated, and therefore, the target SIR in a subframe n+1 is determined to be 20-2 = 18 dB. Next, in the subframe n+1, counter = 1 and variation = (18-12)/(4-1) = 2 dB are calculated, and therefore, the target SIR in a subframe n+2 is determined to be 18-2 = 16 dB.

In a similar way, in the subframe n+2, counter = 2 and variation = (16-12)/(4-2) = 2 dB are calculated, and therefore, the target SIR in a subframe n+3 is determined to be 16-2 = 14 dB. In the subframe n+3, counter = 3 and variation = (14-12)/(4-3) = 2 dB are calculated, and therefore, the target SIR in a subframe n+4 is determined to be 14-2 = 12 dB. Then, in the subframe n+4, the current target SIR is equal to the final target SIR, and therefore, the target SIR = 12 dB is maintained.

As can be seen from the above discussion, the radio base stations 200 and 200a guide the target SIR in a phased manner so that the target SIR is a desired level in the subframe in which the radio resource allocation is present, namely, in the subframe in which the mobile station 100 is considered to start data transmission. This process permits transmission power of the mobile station 100 to be guided in a phased manner so as to be a preferable level.

Control on the transmission power control can be taken over between the radio base stations according to handover or a change in the radio quality. On this occasion, a control state (e.g., current target SIR) also is preferably taken over. The radio base stations 200 and 200a may transmit information indicating the control state through the mobile station 100, or through the core network 400. Hereinafter, an example of the latter take-over process will be described.

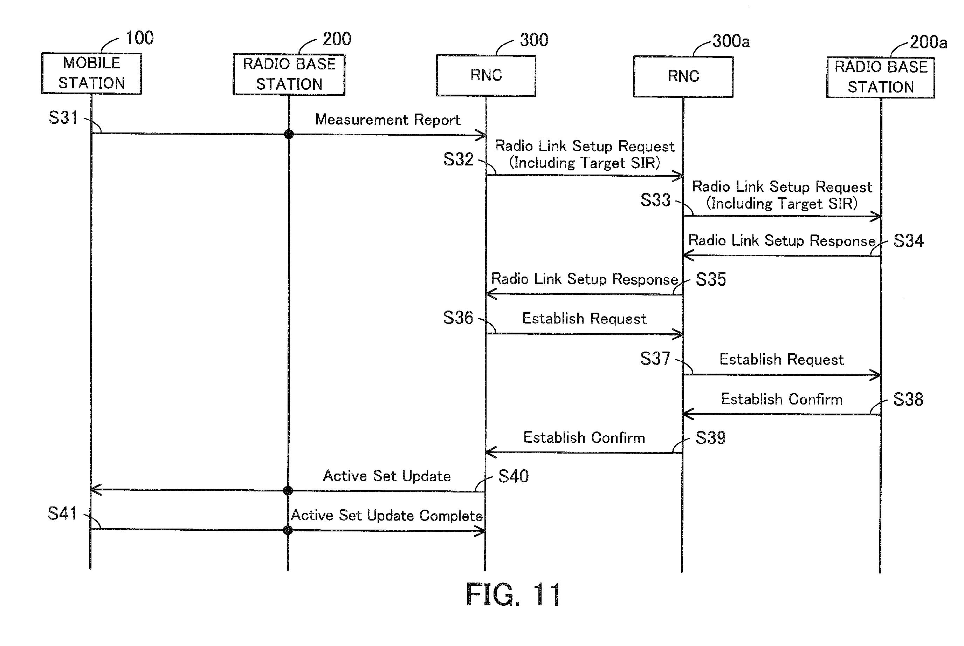

FIG. 11 is a sequence diagram illustrating the handover control. Here, the following section will now discuss the case where the mobile station 100 is handed over from the radio base station 200 to the radio base station 200a. Hereinafter, the process illustrated in FIG. 11 will be described along step numbers.

(Step S31) (Measurement Report) The mobile station 100 measures downlink radio quality based on the received signal from the radio base station 200, and feeds the measurement result back to the radio base station 200. The radio base station 200 transfers the received feedback information to the RNC 300.

(Step S32) (Radio Link Setup Request) The RNC 300 determines the handover from the radio base station 200 to the radio base station 200a based on the feedback information from the mobile station 100. Then, the RNC 300 accesses the radio base station 200 to acquire the current target SIR, and transmits a radio link setup request including the target SIR to the RNC 300a.

(Step S33) (Radio Link Setup Request) The RNC 300a transmits the radio link setup request including the target SIR to the radio base station 200a as a handover destination.

(Step S34) (Radio Link Setup Response) The radio base station 200a maintains the target SIR included in the received radio link setup request. Then, the radio base station 200a transmits a radio link setup response to the RNC 300a when finishing a setting preparation of the radio link between itself and the mobile station 100.

(Step S35) (Radio Link Setup Response) The RNC 300a transmits the radio link setup response to the RNC 300.

(Step S36) (Establish Request) When receiving the radio link setup response of the radio link, the RNC 300 transmits to the RNC 300a an establishment request for connection between the radio base station 200a and the mobile station 100.

(Step S37) (Establish Request) The RNC 300a transmits the establishment request for connection between the radio base station 200a and the mobile station 100 to the radio base station 200a as a handover destination.

(Step S38) (Establish Confirm) The radio base station 200a establishes the connection between itself and the mobile station 100, and transmits an establishment confirmation response for connection to the RNC 300a.

(Step S39) (Establish Confirm) The RNC 300a transmits to the RNC 300 the establishment confirmation response for connection between the radio base station 200a and the mobile station 100.

(Step S40) (Active Set Update) The RNC 300 transmits an update request of an active set (set of the radio base stations as a communication partner of the mobile station 100) to the radio base station 200. The radio base station 200 transmits the update request to the mobile station 100.

(Step S41) (Active Set Update Complete) When receiving the update request, the mobile station 100 adds the radio base station 200a to the active set. Then, the mobile station 100 transmits an update completion response of the active set to the radio base station 200. The radio base station 200 transmits the update completion response to the RNC 300.

The above steps permit the radio base station 200a to take the target SIR over from the radio base station 200 by including the target SIR in a control message transmitted to the radio base station 200a during the handover. The radio base station 200a can resume the transmission power control by using the acquired target SIR as an initial value after the handover completion. Note that for the purpose of preventing the target SIR from suddenly changing before and after the handover completion, the radio base station 200 preferably stops updating the target SIR when transmitting the target SIR to the RNC 300.

According to the present embodiment, the proposed mobile communication system permits the target SIR of the mobile station 100 to be flexibly updated according to an allocation state of radio resources. Particularly, the mobile communication system can also update the target SIR in units of TTIs (subframe unit), and rapidly reflect the allocation state of radio resources. For example, when a radio resource fails to be allocated to the mobile station 100, the mobile communication system can lower the target SIR, whereas when a radio resource is allocated to the mobile station 100, the mobile communication system can raise the target SIR. Further, as the amount of allocated radio resources is larger, the mobile communication system can more raise the target SIR.

As a result, the mobile communication system can operate transmission power of the mobile station 100 along with a data transmission state, and suppress transmission power as much as possible while securing communication quality at a time when the mobile station 100 performs data transmission. In short, the mobile communication system can effectively suppress interference between mobile stations. In addition, when changing transmission power in a phased manner without suddenly changing it, the mobile communication system can more suppress interference.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

1, 2: Radio communication apparatus
1a: Controller
1b: Transmitter

## Claims

1. A radio communication apparatus capable of controlling, according to reception quality of a signal from another radio communication apparatus, transmission power of said another radio communication apparatus, the radio communication apparatus comprising:
a controller to set target reception quality of a signal to be received from said another radio communication apparatus according to an allocation state of radio resources used for data transmission by said another radio communication apparatus; and
a transmitter to transmit a control signal for controlling the transmission power to said another radio communication apparatus on the basis of the reception quality and the target reception quality set by the controller.

2. The radio communication apparatus according to claim 1, wherein the controller sets the target reception quality according to an amount of radio resources allocated to said another radio communication apparatus.

3. The radio communication apparatus according to claim 1, wherein the controller sets the target reception quality for timing when radio resource allocation is present, and changes the target reception quality in a phased manner from the present up to the timing.

4. The radio communication apparatus according to claim 1, wherein the controller further refers to information acquired from a communication control apparatus that controls the radio communication apparatus, and determines the target reception quality.

5. The radio communication apparatus according to claim 1, wherein the controller outputs, when said another radio communication apparatus performs handover, information on the target reception quality to a radio communication apparatus as a handover destination.

6. The radio communication apparatus according to claim 1, wherein the controller updates the target reception quality at predetermined time intervals.

7. A transmission power control method for use in a radio communication apparatus capable of controlling, according to reception quality of a signal from another radio communication apparatus, transmission power of said another radio communication apparatus, the transmission power control method comprising:
setting target reception quality of a signal to be received from said another radio communication apparatus according to an allocation state of radio resources used for data transmission by said another radio communication apparatus; and
transmitting a control signal for controlling the transmission power to said another radio communication apparatus on the basis of the reception quality and the set target reception quality.
